**Europäisches Patentamt**

**European Patent Office**

**Office européen des brevets**

(19)

(11) Veröffentlichungsnummer: **0 263 959 B1**

(12) # EUROPÄISCHE PATENTSCHRIFT

(45) Veröffentlichungstag der Patentschrift: **06.03.91**

(51) Int. Cl.⁵: **C09G 1/12**

(21) Anmeldenummer: **87112868.2**

(22) Anmeldetag: **03.09.87**

(54) **Fussbodenpflegemittel.**

(30) Priorität: **11.09.86 DE 3630905**

(43) Veröffentlichungstag der Anmeldung:
**20.04.88 Patentblatt 88/16**

(45) Bekanntmachung des Hinweises auf die
Patenterteilung:
**06.03.91 Patentblatt 91/10**

(84) Benannte Vertragsstaaten:
**AT BE CH DE ES FR GB GR LI NL SE**

(56) Entgegenhaltungen:
**EP-A- 0 135 404**     **DE-A- 1 812 709**
**DE-A- 1 929 298**     **FR-A- 1 146 885**
**FR-A- 2 075 517**     **GB-A- 1 162 772**
**US-A- 2 066 296**     **US-A- 3 960 575**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Osberghaus, Rainer, Dr.
Südallee 47
W-4000 Düsseldorf(DE)**
Erfinder: **Ameglio, Gian Domenico
Kölner Strasse 65
W-4010 Hilden(DE)**
Erfinder: **Bossek, Harald
Wevelinghover Strasse 12
W-4000 Düsseldorf(DE)**
Erfinder: **Rogmann, Karl-Heinz
Ratiborer Strasse 41
W-4030 Ratingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Pflegemittel für Fußböden, insbesondere für Fußböden aus porösen anorganischen Materialien, wie unglasierten Tonfliesen, sowie die Verwendung dieser Mittel und ein Verfahren zur Pflege der Fußböden.

Fußbodenbeläge aus porösen anorganischen Materialien, wie etwa Tonziegeln oder unglasierten Tonfliesen, sind empfindlich gegen wäßrige und fettige Anschmutzungen. Da diese Verschmutzungen wegen der porösen Struktur des Materials in die Oberfläche eindringen, sind sie nachträglich nur außerordentlich schwer zu entfernen. Man hat daher seit langer Zeit nach Möglichkeiten gesucht, durch eine entsprechende Pflege die Beläge so auszurüsten, daß die Anschmutzungen nicht eindringen und dadurch leichter entfernt werden können.

Ein seit alters her gebräuchliches Verfahren besteht darin, die Fliesen mit Leinöl zu behandeln und dieses Leinöl auf den Fliesen zu einer Schutzschicht verharzen zu lassen. Die Schmutzanfälligkeit der Fliesen wird auf diese Weise deutlich vermindert und gleichzeitig eine sehr erwünschte Vertiefung der Farbe erreicht. Nachteilig an diesem Verfahren ist insbesondere, daß die Verharzung des Leinöls längere Zeit in Anspruch nimmt und während der Trockenzeit die Böden sehr empfindlich bleiben.

Weiterhin werden zur Pflege hochkonzentrierte, meist pastöse Bohnerwachse eingesetzt, die aus Wachsen und organischen Lösungsmitteln bestehen. Das Aufbringen und Einarbeiten dieser Wachse ist sehr arbeitsintensiv, und der Schutz ist, insbesondere gegenüber Öl-Fett-Verschmutzungen, nur mäßig.

Ferner eignen sich zur Behandlung von saugfähigen Fliesen prinzipiell auch Selbstglanzdispersionen, wie sie für die Pflege von Kunststoffböden empfohlen werden. Diese dringen jedoch nicht tief genug in die Fliesen ein und bieten auch nur geringen Schutz gegen Öl-Fett-Verschmutzungen, da Öle und Fette relativ schnell durch die von derartigen Pflegemitteln gebildeten Schutzfilme penetrieren.

Es wurde nun gefunden, daß es möglich ist, mit einer bestimmten Wirkstoffkombination die Nachteile der bisher bekannten Mittel zu überwinden.

Gegenstand der Erfindung ist ein Pflegemittel für Fußböden aus porösen anorganischen Materialien, insbesondere für unglasierte Fliesen, in Form einer Lösung oder Dispersion in unpolarem aprotischen organischen Lösungsmittel, das Hartwachs, festes Paraffin, mikrokristallines Wachs, Leinöl und ein Aminogruppen aufweisendes Silikonöl enthält. Weiterhin sind die Verwendung dieses Mittels zur Pflege von Fußböden aus porösen anorganischen Materialien, insbesondere von unglasierten Fliesen und ein entsprechendes Pflegeverfahren Gegenstand der Erfindung.

Mit porösen Materialien sind dabei feste Stoffe gemeint, die offene Poren besitzen, d.h. Poren, die mit der Oberfläche in Verbindung stehen. Beispiele solcher als Fußbodenbeläge üblichen anorganischen Materialien sind Sandstein, Travertin und ähnliche Kalksteine, Beton, insbesondere aber unglasierte keramische Erzeugnisse mit porösem Scherben, wie Ziegel und Tonfliesen.

Die erfindungsgemäßen Mittel können leicht und schnell appliziert werden und führen in kürzester Zeit zu einer Hydrophobierung der behandelten Oberflächen. Auf Grund dieses wasserabweisenden Effektes dringt in Wasser gelöster Schmutz nicht in das poröse Material ein. Gleichzeitig bietet die erfindungsgemäße Wirkstoffkombination Schutz gegen ölige und fettige Verschmutzungen, die ebenfalls nicht in das Material eindringen und deshalb leicht entfernt werden können. Die Anwendung der Mittel führt zu einer gleichmäßigen Farbvertiefung insbesondere bei Verwendung auf Tonfliesen, die als ein Kennzeichen eines guten Pflegezustandes angesehen wird. Trotz der hohen Füllkraft der Mittel wird der Charakter der Fliesen ansonsten nicht verändert.

Die Ursache für die ausgezeichnete Wirkung der Mittel, insbesondere auch für dem hervorragenden Schutz gegen Ölverschmutzungen, wird im spezifischen Zusammenwirken der einzelnen Inhaltsstoffe gesehen.

Vorzugsweise haben die erfindungsgemäßen Mittel folgende Zusammensetzung:

2      bis    15 Gew.-% Hartwachse,

2      bis    15 Gew.-% Paraffine,

0,2    bis    15 Gew.-% mikrokristalline Wachse,

0,5    bis     5 Gew.-% Leinöle,

0,2    bis    17 Gew.-% Aminogruppen enthaltende Silikonöle,

0      bis     1 Gew.-% übliche Zusatzstoffe,

ad            100 Gew.-% unpolare aprotische Lösungsmittel.

Zu den Komponenten im einzelnen:

Hartwachse

Geeignet sind natürliche Wachse pflanzlichen Ursprungs, wie Carnaubawachs und Candelillawachs, Montansäure- und Montanesterwachse, anoxidierte synthetische Paraffine, die gegebenenfalls Metallseifen enthalten können, Polyethylenwachse und Polyvinyletherwachse. Von diesen werden vorzugsweise Montansäure- und Montanesterwachse, anoxidierte synthetische Paraffinwachse, Polyethylenwachse und deren Mischungen eingesetzt. Der Anteil der Wachse an den erfindungsgemäßen Mitteln beträgt 2 bis 15 Gew.-%, vorzugsweise 5 bis 10 Gew.-%.

Beispiele für die vorzugsweise verwendeten Wachse sind die von der Firma Hoechst angebotenen Typen KSL, OP, R 21, PA 130 und PED 261. Natürliche pflanzliche Wachse und spezielle synthetische Wachse, wie das Polyetherwachs V der Firma Hoechst werden im allgemeinen nur als Zusätze in geringer Menge eingearbeitet.

Paraffine

Unter dieser Bezeichnung werden die überwiegend aus unverzweigten Paraffinen bestehenden makrokristallinen Paraffinwachse verstanden, wie sie aus der Erdöldestillation erhalten werden. Bevorzugtes Paraffin ist ein raffiniertes Paraffin (Tafelparaffin) mit einem Erstarrungspunkt zwischen 52 und 62 °C. Der Anteil der Paraffine an den erfindungsgemäßen Mitteln beträgt 2 bis 15 Gew.-%, vorzugsweise 3 bis 8 Gew.-%.

Mikrokristalline Wachse

Diese Wachse bestehen wie die makrokristallinen Paraffine aus einem Gemisch gesättigter, vorwiegend fester Kohlenwasserstoffe, doch sind hier die Isoparaffine und naphthenischen Verbindungen vorherrschend. Sie werden üblicherweise aus Erdöl gewonnen. Auch die heute unter der Bezeichnung Ozokerit vertriebenen Wachse gehören zu dieser Gruppe. Geeignet sind Wachse mit Erstarrungspunkten zwischen 65 und 100 °C, insbesondere 66 bis 76 °C. Der Anteil der mikrokristallinen Wachse an den erfindungs gemäßen Mitteln beträgt 0,2 bis 15 Gew.-%, vorzugsweise 0,5 bis 5 Gew.-%.

Leinöle

Geeignet sind trocknende Öle pflanzlichen Ursprungs, d. h. Öle, die einen hohen Anteil an mehrfach ungesättigten Fettsäuren aufweisen. Bevorzugt wird Leinöl, insbesondere in raffinierter Form, eingesetzt. Der Gehalt in den erfindungsgemäßen Mitteln beträgt 0,5 bis 5 Gew.-%, vorzugsweise 0,5 bis 3 Gew.-%. Besonders bevorzugt ist die Mitverwendung von Trockenstoffen, die die Verharzung des Leinöls beschleunigen. Es handelt sich dabei um Salze mehrwertiger Metallionen, wie Cobalt und Mangan, die in der Lage sind, die oxidativen Reaktionen, die zur Verharzung führen, zu beschleunigen. Die Mengen dieser Trockenstoffe liegen bei etwa 0,01 bis 1 Gew.-% Metallion, bezogen auf Leinöl. Vorzugsweise werden zur Herstellung der Mittel Vorgemische aus Leinöl und derartigen Trockenstoffen eingesetzt, die als Leinölfirnis bekannt sind. Insbesondere wird Leinölfirnis entsprechend der Deutschen Industrie Norm DIN 55932 verwendet.

Silikonöle

Geeignet sind Silikonöle vom Typ der Dimethylsiloxane, die zusätzlich über Kohlenstoff an Silizium gebundene Aminogruppen enthalten. Dabei kann es sich sowohl um Aminogruppen tragende Polysiloxane als auch um Gemische aus unsubstituierten Polysiloxanen und niedermolekularen Aminoalkylsilanen handeln. Vorzugsweise enthalten die Silikonöle 0,05 bis 5 Gew.-%, insbesondere 0,2 bis 3 Gew.-% Stickstoff in Form von Aminogru ppen. Beispiele derartiger Aminogruppen enthaltender Silikonöle sind Tegosivin L 49 der Firma Th. Goldschmidt AG., die Typen L 650, L 651 und VP 1306 der Firma Wacker, der Typ Silan AFL 40 der Firma Union Carbide, sowie die in den US-Patenten 3 836 371 und 3 890 271 der Firma Dow Corning beschriebenen Mischungen. Die Silikonöle werden vorzugsweise zusammen mit Säuregruppen enthaltenden Wachsen eingesetzt. Der Anteil der Silikonöle an den erfindungsgemäßen Mitteln beträgt 0,2 bis 7 Gew.-%, vorzugsweise 0,3 bis 3 Gew.-%, gerechnet als lösungsmittelfreie Ware.

Übliche Zusatzstoffe

Neben den vorgenannten Bestandteilen können die Mittel übliche Zusatzmittel, insbesondere Farbstoffe und Parfümöle enthalten. Die Mengen dieser Bestandteile liegen in der Regel unter 1 Gew.-%, vorzugsweise zwischen 0,001 und 1 Gew.-%.

Organische Lösungsmittel

Bei den verwendeten organischen Lösungsmitteln handelt es sich um unpolare aprotische Verbindungen mit hohem Lösevermögen für die Wirkstoffe. Geeignet sind in erster Linie Kohlenwasserstoffe und chlorierte Kohlenwasserstoffe, wie Benzine mit Siedebereichen von 130 bis 300 °C, Trichlorethylen und Trichlorethan, doch können daneben in kleinen Mengen auch andere Lösungsmittel wie Terpentinöl, Butanol und Butylacetat anwesend sein. Besonders bevorzugt werden aromatenarme und aromatenfreie Benzine mit Siedebereichen von 140 bis 220 °C.

Der Wirkstoffgehalt der Produkte kann in weiten Grenzen etwa zwischen 5 und 60 Gew.-% schwanken, je nach dem, ob ein flüssiges, ein halbpastöses oder ein pastöses Produkt gewünscht wird. Pastöse Produkte besitzen in der Regel Wirkstoffgehalte zwischen 20 und 60 Gew.-%; halbpastöse Produkte liegen mit ihrem Feststoffgehalt üblicherweise zwischen 18 und 30 Gew.-%; die bevorzugte flüssige Form der Mittel weist normalerweise einen Wirkstoffgehalt zwischen 5 und 22 Gew.-%, vorzugsweise zwischen 10 und 18 Gew.-% auf.

Die Herstellung der Mittel bietet keine Besonderheiten. Im allgemeinen werden die Einzelkomponenten in flüssiger oder vorgelöster Form in den Mischbehälter eingetragen und dort alle gemeinsam oder stufenweise miteinander vermischt. Vorzugsweise wird unter Sauerstoffausschluß gearbeitet, um eine vorzeitiges Verharzen des Produktes mit Sicherheit zu vermeiden.

Die erfindungsgemäßen Mittel lassen sich auf nahezu allen porösen Fußbodenbelägen mit Erfolg einsetzen. Besondere Vorzüge besitzen sie aber an porösen, anorganischen Materialien, insbesondere Tonfliesen. Die Anwendung geschieht hier in der Weise, daß bei jedem Auftrag etwa 15 bis 50 ml der Mittel pro Quadratmeter Fußboden aufgebracht und gleichmäßig verteilt werden. Vorzugsweise sollen dabei 4 g bis 20g der Wirkstoffe pro Quadratmeter, je nach Wirkstoffgehalt der Mittel in einem oder mehreren Arbeitsgängen, aufgetragen werden. Nach dem Einziehen der Mittel, dem Abdunsten des Lösungsmittels und einer kurzen Nachtrockenzeit können die Fußböden poliert werden. Das beschriebene Pflegeverfahren ist einfach und effektiv zugleich.

Eine besonders bevorzugte Variante des erfindungsgemäßen Verfahrens sieht vor, die Mittel auf Fliesen anzuwenden, die vorher durch Behandlung mit polymeren Fluorkohlenstoffverbindungen und Silikonharzen wasser- und ölabweisend ausgerüstet worden sind. In diesem Falle sorgt das Pflegeverfahren für einen besonders lang anhaltenden Schutz.

Beispiele

Beispiel 1

Herstellung eines Fußbodenpflegemittels

In einem beheizten 2000 l Tank wurden unter Rühren

120,0 kg   anoxidiertes Paraffinwachs (Säurezahl 3,5, Gehalt an

Alkali- und Erdalkaliseife 6 Gew.-%)

75,0 kg   vollraffiniertes Paraffin (Erstarrungspunkt 58

bis 60 °C

22,5 kg   Ozokerit (Erstarrungspunkt 71 bis 73 °C, hellfarbig)

0,9 kg   Monoazofarbstoff, braun (CI 12010)

transparent bei ca. 90 °C aufgeschmolzen. In einem zweiten 2000 l Tank wurden 1247 kg aromatenarmes Testbenzin (Siedebereich 145 bis 200 °C, Aromatengehalt 18 %) ebenfalls auf ca. 90 °C erwärmt und dann unter Rühren in die Wachsschmelze gegeben. Nach dem Abkühlen der entstandenen Wachsdispersion auf Raumtemperatur wurden

15,0 kg   aminogruppenhaltiges Siliconöl (50 %ige Lösung in

Testbenzin/n-Butanol)

15,0 kg   Leinölfirnis nach DIN 55932

15,0 kg   Parfümöl (agrumig)

eingerührt. Der fertige Sud wurde in Blechkanister abgefüllt.

Beispiel 2

Anwendung zur Pflege von Cotto-Fliesen

Cotto-Fliesen sind rustikale, unglasierte, saugfähige Tonfliesen, die in ungeschütztem Zustand leicht Wasserflecken entwickeln und wasser- und fettlöslichen Schmutz aufnehmen.

Das erfindungsgemäße Produkt wurde auf die Fliesen durch einfaches Verteilen mittels eines Baumwolläppchens dreimal nacheinander dünn aufgebracht. Nach jedem Auftrag konnte das Produkt jeweils eine halbe Stunde bei Raumtemperatur trocknen. Die gesamte aufgetragene Menge betrug im Mittel 12 g/m². Zum Vergleich dienten unbehandelte Cotto-Fliesen sowie CottoFliesen, die jeweils dreimal mit einem handelsüblichen Bohnerwachs (a) oder mit einer handelsüblichen Selbstglanzdispersion (b) oder mit Leinöl (c) behandelt worden waren. Im Falle des Leinöls betrug die Trockenzeit insgesamt 1 Monat.

Auf die derart behandelten Fliesen wurden jeweils gleiche Mengen Wasser oder Olivenöl aufgetropft. Nach 0,5, 2, 6 und 24 Stunden wurden die Tropfen, soweit sie noch erkennbar waren, abgewischt und die verbliebenen Flecken visuell abgemustert. Die Bewertungsskala der Fleckintensität reichte von 0 (= fleckenfrei) bis 10 (intensive Fleckenbildung). Das Ergebnis zeigt die nachfolgende Tabelle.

## Tabelle: Anschmutzungsverhalten (Punktbewertung 0 - 10)

| Pflege-<br>mittel | Wasser<br>Einwirkungszeit/h | | | | Olivenöl<br>Einwirkungszeit/h | | | |
|---|---|---|---|---|---|---|---|---|
| | 0,5 | 2 | 6 | 24 | 0,5 | 2 | 6 | 24 |
| – | 2 | 4 | 4 | 4 | 4 | 6 | 9 | 10 |
| Beispiel 1 | 0 | 0 | 0 | 0 | 0 | 0 | 1 | 1 |
| a | 0 | 0 | 1 | 1 | 1 | 2 | 5 | 6 |
| b | 0 | 1 | 3 | 5 | 1 | 1 | 4 | 4 |
| c | 0 | 0 | 1 | 1 | 0 | 0 | 1 | 2 |

Aus den Ergebnissen wird deutlich, daß die erfindungsgemäßen Mittel sowohl gegenüber Wasser als auch Ölanschmutzungen außerordentlich wirksamen Schutz bieten. Sie übertreffen in ihrer Wirkung die handelsüblichen Mittel meist sehr deutlich und weisen gegenüber der Imprägnierung mit Leinöl zudem eine sehr viel kürzere Trockenzeit auf.

**Ansprüche**

1. Pflegemittel für Fußböden aus porösen anorganischen Materialien in Form einer Lösung oder Dispersion in unpolarem, aprotischen organischen Lösungsmittel, enthaltend
   a) 2 bis 15 Gew.-% Hartwachs
   b) 2 bis 15 Gew.-% festes Paraffin
   c) 0.2 bis 15 Gew.-% mikrokristallines. Wachs
   d) 0.5 bis Gew.-% Leinöl
   e) o.2 bis 7 Gew.-% aminofunktionelles Silikonöl

2. Pflegemittel nach Anspruch 1, dadurch gekennzeichnet, daß Trockenmittel, die die Verfestigung des Leinöls beschleunigen, im Leinöl enthalten sind.

3. Pflegemittel nach Anspruch 1 oder 2, bestehend aus

   a) 2     bis 15  Gew.-%  Hartwachs,

   b) 2     bis 15  Gew.-%  festem Paraffin,

   c) 0,2   bis 15  Gew.-%  mikrokristallinem Wachs,

   d) 0,5   bis 5   Gew.-%  Leinöl,

   e) 0,2   bis 7   Gew.-%  aminofunktionellem Silikonöl,

   f) 0     bis 1   Gew.-%  üblichen Zusatzstoffen,

   g) ad    100 Gew.-%  unpolarem, aprotischen organischen

   Lösungsmittel.

6

4. Pflegemittel nach einem der Ansprüche 1 bis 3, dadurch gekennzeichnet, daß das Hartwachs (a) aus der Gruppe Polyethylenwachse, Montansäure- und/oder Montanesterwachse, anoxidierte Paraffinwachse und deren Mischungen ausgewählt ist.

5. Pflegemittel nach einem der Ansprüche 1 bis 4, dadurch gekennzeichnet, daß es sich bei dem festen Paraffin um ein raffiniertes Paraffin mit einem Erstarrungspunkt von 52 bis 62° C handelt.

6. Pflegemittel nach einem der Ansprüche 1 bis 5, dadurch gekennzeichnet, daß das aminofunktionelle Silikonöl 0,05 bis 5 Gew.-% Stickstoff in Form von Aminogruppen enthält.

7. Pflegemittel nach einem der Ansprüche 1 bis 6, dadurch gekennzeichnet, daß das organische Lösungsmittel ein aromatenarmes Benzin mit einem Siedebereich zwischen 140 und 220° C ist.

8. Pflegemittel nach einem der Ansprüche 1 bis 7, bestehend aus:

a) 5 bis 10 Gew.-% Hartwachs aus der Gruppe Montansäurewachse, Montanesterwachse, anoxidierte synthetische Paraffinwachse, Polyethylenwachse und deren Mischungen,

b) 3 bis 8 Gew.-% raffiniertem Paraffin mit einem Erstarrungspunkt zwischen 52 und 62 °C,

c) 0,5 bis 5 Gew.-% mikrokristallinem Wachs mit einem Erstarrungspunkt zwischen 66 und 76 °C,

d) 0,5 bis 3 Gew.-% Leinölfirnis,

e) 0,3 bis 3 Gew.-% Silikonöl mit einem Gehalt an 0,05 bis 5 Gew.-% Stickstoff in Form von Aminogruppen,

f) 0,001 bis 1 Gew.-% Farbstoff und/oder Parfümöl,

g) ad 100 Gew.-% aromatenarmem Benzin mit einem Siedebereich zwischen 140 und 220 °C.

9. Verwendung eines Mittels nach einem der Ansprüche 1 bis 8 zur Pflege von porösen anorganischen Materialien, insbesondere unglasierten Fliesen.

10. Verwendung nach Anspruch 9 nach einer Vorbehandlung der unglasierten Fliesen mit polymeren Fluorkohlenstoffverbindungen und Silikonharzen.

11. Verfahren zur Behandlung von porösen anorganischen Materialien, insbesondere von unglasierten Fliesen, dadurch gekennzeichnet, daß ein Mittel nach einem der Ansprüche 1 bis 8 in Mengen von 15 bis 50 ml pro m² gleichmäßig auf die Fliesen aufgetragen wird.

12. Verfahren nach Anspruch 11, bei dem die unglasierten Fliesen zunächst eine Vorbehandlung mit polymeren Fluorkohlenstoffverbindungen und Silikonharzen erfahren haben.

**Claims**

1. A floor-care preparation for floors of porous inorganic materials in the form of a solution or dispersion in an apolar, aprotic organic solvent, containing

a) 2 to 15% by weight hard wax,
b) 2 to 15% by weight solid paraffin,
c) 0.2 to 15% by weight microcrystalline wax,
d) 0.5 to 5% by weight linseed oil,
e) 0.2 to 7% by weight aminofunctional silicone oil.

2. A floor-care preparation as claimed in claim 1, characterized in that siccatives which accelerate resinification of the linseed oil are present in the linseed oil.

3. A floor-care preparation as claimed in claim 1 or 2, consisting of
a) 2 to 15% by weight hard wax,
b) 2 to 15% by weight paraffin,
c) 0.2 to 15% by weight microcrystalline wax,
d) 0.5 to 5% by weight linseed oil,
e) 0.2 to 7% by weight aminofunctional silicone oil f)0 to 1% by weight standard additives, g) ad 100% by weight apolar, aprotic organic solvent.

4. A floor-care preparation as claimed in any of claims 1 to 3, characterized in that the hard wax (a) is selected from the group comprising polyethylene waxes, montanic acid and/or montanic ester waxes, oxidized paraffin waxes and mixtures thereof.

5. A floor-care preparation as claimed in any of claims 1 to 4, characterized in that the solid paraffin is a refined paraffin having a solidification point of from 52 to 62° C.

6. A floor-care preparation as claimed in any of claims 1 to 5, characterized in that the aminofunctional silicone oil contains from 0.05 to 5% by weight nitrogen in the form of amino groups.

7. A floor-care preparation as claimed in any of claims 1 to 6, characterized in that the organic solvent is a low-aromatic gasoline having a boiling range of 140 to 220° C.

8. A floor-care preparation as claimed in any of claims 1 to 7, consisting of:
a) 5 to 10% by weight hard wax from the group comprising montanic acid waxes, montanic ester waxes, oxidized synthetic paraffin waxes, polyethylene waxes and mixtures thereof,
b) 3 to 8% by weight refined paraffin having a solidification point of from 52 to 62° C,
c) 0.5 to 5% by weight microcrystalline wax having a solidification point of from 66 to 76° C,
d) 0.5 to 3% by weight linseed oil varnish,
e) 0.3 to 3% by weight silicone oil containing from 0.05 to 5% by weight nitrogen in the form of amino groups,
f) 0.001 to 1% by weight dye and/or perfume oil,
g) ad 100% by weight low-aromatic gasoline having a boiling range of 140 to 220° C.

9. The use of the preparation claimed in any of claims 1 to 8 for the care of porous inorganic materials, more especially unglazed tiles.

10. The use claimed in claim 9 after pretreatment of the unglazed tiles with polymeric fluorocarbon compounds and silicone resins.

11. A method for the treatment of porous inorganic materials, more especially unglazed tiles, characterized in that the preparation claimed in any of claims 1 to 8 is uniformly applied to the tiles in quantities of from 15 to 50 ml/m².

12. A method as claimed in claim 11, in which the unglazed tiles are first pretreated with polymeric fluorocarbon compounds and silicone resins.

**Revendications**

1. Produit d'entretien pour planchers en matériaux minéraux poreux, sous la forme d'une solution ou d'une dispersion dans un solvant organique aprotique non polaire contenant :
   a) de 2 à 15 % en poids de cire dure
   b) de 2 à 15 % en poids de paraffine solide
   c) de 0,2 à 15 % en poids de cire microcristalline
   d) de 0,5 à 5 % en poids d'huile de lin
   e) de 0,5 à 7 % en poids d'huile de silicone fonctionnalisée par un groupe amino.

2. Produit d'entretien selon la revendication 1, caractérisé en ce que les agents de séchage qui accélèrent la solidification de l'huile de lin, sont contenus dans l'huile de lin.

3. Produit d'entretien selon la revendication 1 ou 2 constitué par :
   a) de 2 à 15 % en poids de cire dure
   b) de 2 à 15 % en poids de paraffine solide
   c) de 0,2 à 15 % en poids de cire microcristalline
   d) de 0,5 à 5 % en poids d'huile de lin
   e) de 0,2 à 7 % en poids d'huile de silicone fonctionnalisée par un groupe amino
   f) de 0 à 1 % d'additifs usuels
   g) qsp 100 % en poids de solvant organique aprotique non polaire.

4. Produit d'entretien selon l'une des revendications 1 à 3, caractérisé en ce que la cire dure (a) est choisie dans le groupe des cires de polyéthylène, des cires d'acide montanique, et/ou des cires d'esters d'acide montanique, des cires de paraffines oxydées anodiquement ainsi que leurs mélanges.

5. Produit d'entretien selon l'une des revendications 1 à 4, caractérisé en ce qu'il s'agit pour la paraffine solide, d'une paraffine raffinée ayant un point de ramollissement de 52 à 62° C.

6. Produit d'entretien selon l'une des revendications 1 à 5, caractérisé en ce que l'huile de silicone fonctionnalisée par un groupe amino renferme de 0,05 à 5 % en poids d'azote sous la forme de groupes amino.

7. Produit d'entretien selon l'une des revendications 1 à 6, caractérisé en ce que le solvant organique est une essence pauvre en substances aromatiques avec une zone d'ébullition entre 140 à 220° C.

8. Produit d'entretien selon l'une des revendications 1 à 7 consistant en :
   a) de 5 à 10 % en poids de cire dure choisie dans le groupe des cires d'acide montanique, des cires d'ester montanique, des cires de paraffine synthétiques oxydées anodiquement, des cires de polyéthylène et leurs mélanges
   b) de 3 à 8 % en poids de paraffine raffinée ayant un point de ramollissement entre 52 et 62° C
   c) de 0,5 à 5 % en poids de cire microcristalline ayant un point de ramollissement entre 66 et 76° C
   d) de 0,5 à 3 % en poids de vernis d'huile de lin
   e) de 0,3 à 3 % en poids d'huile de silicone ayant une teneur de 0,05 à 5 % en poids d'azote sous la forme de groupes amino
   f) de 0,001 à 1 % en poids de colorant et/ou d'huile essentielle
   g) qsp 100 % en poids d'essence pauvre en substances aromatiques ayant une zone d'ébullition comprise entre 140 et 220° C.

9. Utilisation d'une composition selon l'une revendications 1 à 8 pour l'entretien de matériaux minéraux poreux, en particulier des carreaux non émaillés.

10. Utilisation selon la revendication 9 après un traitement préalable des carreaux non émaillés avec des composés polymériques d'hydrocarbures fluorés et des résines siliconées.

11. Procédé pour le traitement des matériaux minéraux poreux, en particulier de carreaux non émaillés, caractérisé en ce qu'une composition selon l'une des revendications 1 à 8 est appliquée d'une manière égale en quantités de 15 à 50 ml par m² sur les carreaux.

12. Procédé selon la revendication 11 pour lequel les carreaux non émaillés subissent d'abord un prétraitement avec des composés polymériques d'hydrocarbures fluorés et avec des résines siliconées.